# FASCICULE DE BREVET EUROPEEN

(11) **EP 1 484 542 B1**
(45) Date de publication et mention de la délivrance du brevet: **05.11.2008**
(21) Numéro de dépôt: 04291308.7
(22) Date de dépôt: 24.05.2004
(51) Int. Cl.: F16L 19/12

(54) **Dispositif de raccordement pour tuyauteries de fluides à haute pression**
Verbindungsvorrichtung für Hochdruckfluidleitungen
Connecting device for high-pressure fluid conduits

(30) Priorité: 03.06.2003 FR 0306665
(43) Date de publication de la demande: 08.12.2004
(73) Titulaire: LEGRIS S.A., F-35000 Rennes (FR)
(72) Inventeur: Sinning, Hans Dieter, 34286 Spangenberg (DE); Le Quere, Philippe, 35830 Betton (FR); Kendziorra, Thomas, 34225 Baunatal (DE); Sanchez, Frédéric, 35200 Rennes (FR)
(74) Mandataire: Robert, Jean-Pierre

(56) Documents cités:
- DE-A- 4 322 425
- DE-A- 19 637 129
- US-A- 6 073 976

## Description

La présente invention concerne les raccords pour tuyauteries, notamment pour tuyauteries métalliques destinées à véhiculer des fluides à haute pression.

### ARRIERE PLAN DE L'INVENTION

Ces dispositifs comprennent de manière connue depuis longtemps un corps dans lequel pénètre une extrémité de la tuyauterie à raccorder, du côté d'un embout fileté extérieurement de ce corps qui comporte un logement d'accueil de l'extrémité de la tuyauterie avec une section d'entrée conique appelée cône à 24°. Un écrou est susceptible d'être vissé sur l'embout fileté et un ensemble de pièces (en général deux) annulaires sont pressées entre le corps et l'écrou pour d'une part assurer l'arrimage mécanique du corps à la tuyauterie et d'autre part l'étanchéité entre ce corps et cette tuyauterie.

Dans le document SE 466 468, l'étanchéité est assurée par une bague avant métallique qui pénètre dans le cône à 24° jusqu'à ce qu'un talon vienne en butée à l'embouchure du cône. L'arrimage mécanique est assuré par une bague arrière de poussée de la bague avant qui possède une extension du côté de la bague avant s'engageant dans un cône de cette dernière forçant l'extension à se rétreindre radialement pour se sertir sur le tube et une extension du côté de l'écrou qui coopère également avec une surface conique de cet écrou pour également être sertie sur le tube. DE 196 37 129 montre un raccord du même type.

Dans d'autres dispositifs comme ceux illustrés par le document DE 19 727 149 ou comme ceux qui sont présents sur le marché, d'une part la bague avant dite d'étanchéité porte un nez en élastomère qui seul pénètre dans le cône à 24° du corps, et d'autre part, la bague arrière dite bague coupante ne mord dans le tube que par son extension du côté de la bague d'étanchéité.

Dans le premier type de dispositifs on a constaté qu'après un usage prolongé, il se produisait des fuites tenant principalement au fait que les variations de pression engendrent des vibrations qui provoquent des micro-matages des pièces métalliques en contact, donnant ainsi naissance à des jeux, sièges des fuites constatées.

Dans le second type de dispositifs, l'alignement des pièces et notamment de la bague d'étanchéité avec son nez en élastomère et du cône à 24° n'est pas toujours satisfaisant si bien que lors du montage, la coopération des pièces entre elles est défectueuse et l'étanchéité mal assurée.

### OBJET DE L'INVENTION

La présente invention entend remédier aux inconvénients des dispositifs antérieurs en prévoyant pour la bague d'étanchéité une structure qui comporte les avantages d'une bague entièrement métallique en ce qui concerne notamment son guidage, et ceux d'une bague avec élément d'étanchéité en matériau non métallique, plastique ou élastomère en ce qui concerne la qualité et la longévité de l'étanchéité réalisée.

### BREVE DESCRIPTION DE L'INVENTION

A cet effet donc, l'invention a pour objet un dispositif de liaison étanche de l'extrémité d'une tuyauterie à un corps présentant un embout fileté extérieurement et un logement intérieur d'accueil de cette extrémité avec une section d'entrée conique, comprenant :
- un écrou avec une chambre taraudée pour la réalisation et le démontage de la liaison, coopérant avec l'embout fileté,
- une bague coupante et une bague d'étanchéité montées l'une derrière l'autre dans la chambre de l'écrou pour être serrées entre ce dernier et le corps, la bague d'étanchéité comportant un nez destiné à pénétrer dans la section conique du corps et une partie arrière comportant un cône de sertissage d'un chant coupant de la bague coupante, dans lequel le nez susdit est formé par une collerette métallique, en une seule pièce avec la partie arrière de la bague coupante, de surface extérieure conique et de pente identique à celle de la section conique du corps et comportant une gorge circulaire extérieure formant logement pour un joint d'étanchéité en matériau déformable, tandis que la partie arrière de la bague d'étanchéité est pourvue d'une gorge intérieure à l'extrémité du petit diamètre du cône de sertissage rappelé ci-dessus, gorge qui forme un logement pour un joint d'étanchéité en matériau déformable.

Ce nez composite de la bague d'étanchéité est de longueur suffisante pour être déformé en pénétrant dans le cône à 24° en direction radiale pour mordre sur le tube et constituer par ce contact intime entre le nez déformé et le tube une première barrière étanche. Du côté du cône, l'étanchéité est essentiellement assurée par la bague en matériau plastique déformable qui peut absorber sans perte de contact, les divers trépidations de la tuyauterie en fonctionnement et ainsi compenser les mi-cromatages qui pourraient exister enter la bague d'étanchéité et le cône à 24°.

En outre, le joint d'étanchéité intérieur disposé entre la bague d'étanchéité et le tube, vient renforcer la barrière étanche que forme le nez serti dans le tube. Sa localisation à l'extrémité du cône de sertissage de la bague coupante a pour intérêt de profiter de la pénétration de la bague coupante dans ce cône de sertissage qui en étant déformé radialement, vient également comprimer ce joint intérieur et renforcer l'effet d'étanchéité qu'il assure.

Dans un autre mode de réalisation de l'invention, la collerette susdite est fendue longitudinalement de manière à former une pluralité de secteurs indépendants circonférentiellement. On associe à cette géométrie un joint d'étanchéité qui comporte un anneau arrière engagé dans la gorge circulaire extérieure susdite, un anneau avant situé devant l'extrémité libre des secteurs métalliques et des bras intermédiaires qui relient les deux anneaux et qui sont logés dans les fentes de la collerette.

Dans l'un ou l'autre des modes de réalisation, la liaison entre les joints d'étanchéité et la partie métallique du nez de la bague d'étanchéité est réalisée par correspondance de forme soit en profitant de l'élasticité du matériau du joint pour le loger dans les gorges qui doivent l'accueillir, soit par surmoulage.

Le dispositif de l'invention comprend également un organe de maintien à l'état assemblé des deux bagues dans la chambre de l'écrou qui est constitué par un mandrin divisé par un épaulement en une section logée dans la chambre de l'écrou jusqu'à l'épaulement sur laquelle au moins la bague d'étanchéité est maintenue par friction et une section externe à l'écrou servant de support d'identification du dispositif. Ce manchon fait que l'écrou et les deux bagues coupante et d'étanchéité sont réunies en une unité préassemblée qui facilite son conditionnement et son transport et permet d'éviter les pertes de composants. En outre, ce mandrin constitue un bouchon du dispositif de liaison lorsque celui-ci est associé à l'embout fileté du corps avant que le tuyau ne soit mis en place, bouchon qui préserve tout le volume intérieur du dispositif d'une pollution et des poussières qui pourraient venir s'y loger avant sa mise en service effective avec une tuyauterie.

D'autres caractéristiques et avantages ressortiront de l'invention au cours de la description donnée ci-après d'un exemple de sa réalisation.

### BREVE DESCRIPTION DES DESSINS

Il sera fait référence aux dessins annexés parmi lesquels :
- la figure 1 illustre la géométrie générale d'un dispositif analogue à l'invention, sans toutefois la bague d'étanchéité,
- la figure 2 illustre les deux bagues mises en oeuvre dans l'invention sur un tube, dans une première réalisation de la bague d'étanchéité,
- la figure 3 est une vue semblable à la figure 2 avec une seconde réalisation de la bague d'étanchéité,
- les figures 4, 5 et 6 illustrent le remplacement possible du matériau synthétique d'étanchéité d'un dispositif de liaison selon l'invention conforme à la figure 3 si, après avoir démonté la tuyauterie, on constate une détérioration du dispositif de joint d'origine.

### DESCRIPTION DETAILLEE DE L'INVENTION

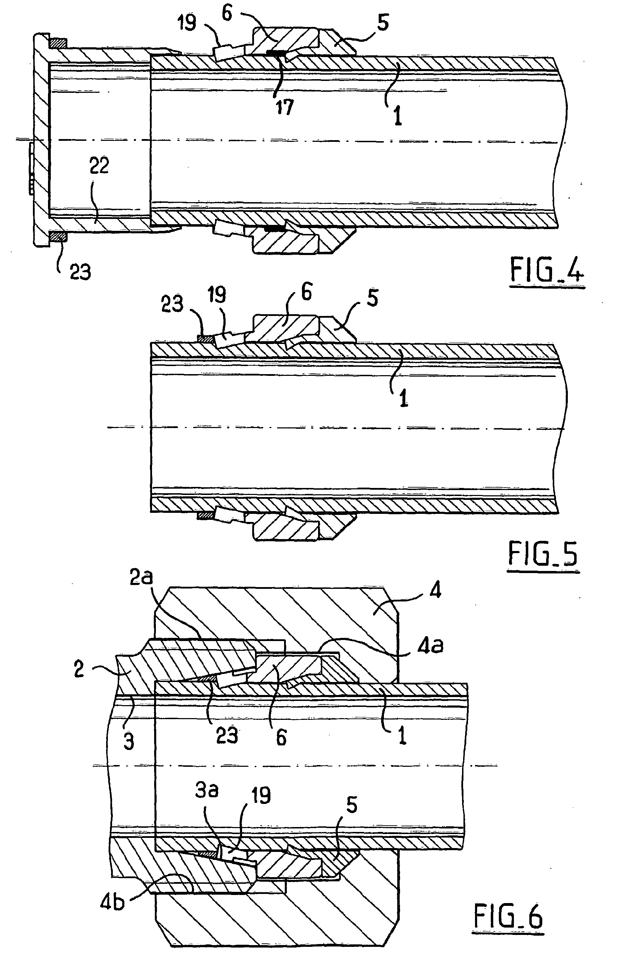

De manière tout à fait classique, le dispositif de liaison étanche ou de raccordement d'une tuyauterie 1 à un corps 2 pourvu d'un embout fileté 2a et d'un logement 3 d'accueil du tube 1 comportant une section d'entrée conique 3a de cône à 24° (figure 6), comprend un écrou 4, une bague coupante 5 et une bague d'étanchéité 6.

La bague coupante 5 possède une extension avant 5a qui porte le chant coupant 5b, cette extension pénétrant dans la partie arrière conique 6a de la bague d'étanchéité 6 dont la partie avant se termine par un nez 6b. Les bagues 5 et 6 sont logées à l'intérieur d'une chambre 4a de l'écrou 4 qui possède un taraudage 4b. La paroi arrière de l'écrou 4 et pourvue d'un orifice 7 de passage soit du tube à raccorder, soit d'un mandrin 8 réalisé par exemple en matière plastique, qui est divisé en une section cylindrique 9, ici tubulaire, interne à la chambre 4a et une section 10 externe à l'écrou, par un épaulement 11. La section interne 9 possède au droit de la bague d'étanchéité 6 logée dans la chambre 4a, un bourrelet 12 qui coopère par friction avec cette bague d'étanchéité 6 de manière à former un moyen de retenue des deux bagues 5 et 6 à l'intérieur de la chambre de l'écrou 4. La partie externe 10 du mandrin 8 constitue le support pour un signe 13 d'identification du dispositif de raccordement tel que par exemple le diamètre nominal du tube auquel ce dispositif est destiné. On notera que cet ensemble, dans lequel la section 10 du mandrin 8 externe est située à l'opposé du nez 6b de la bague 6, peut se monter provisoirement à l'extrémité du corps 2 en étant partiellement vissé sur l'embout fileté 2a et former un bouchon pour ce corps 2 avant l'installation de la tuyauterie à raccorder. On indiquera également que l'ensemble des composants écrou, bague coupante et bague d'étanchéité maintenus en une unité par le mandrin 8 est de manutention et de conditionnement beaucoup plus simples que si les composants étaient séparés.

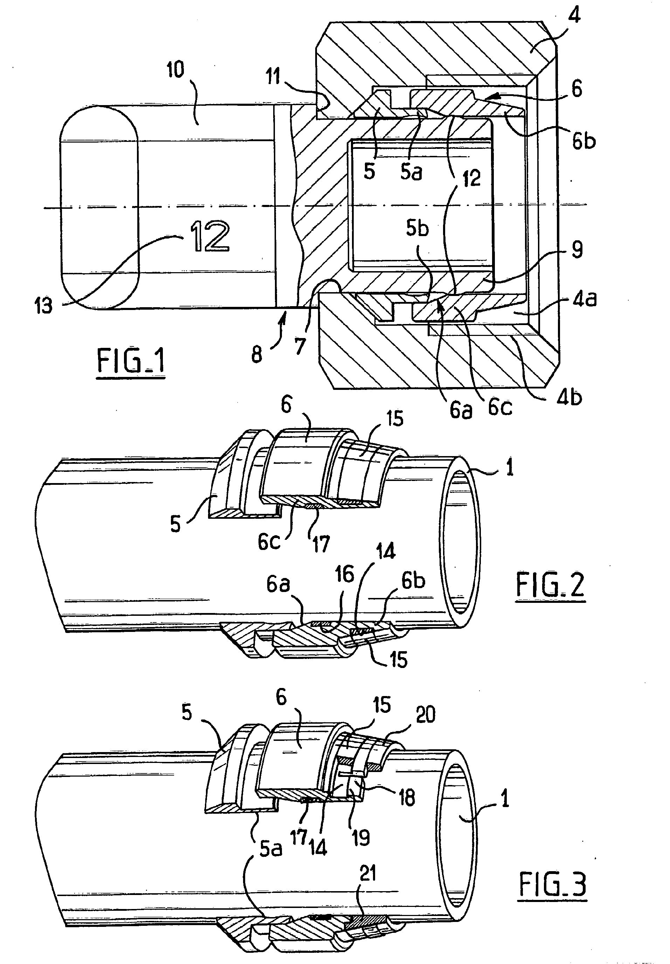

A la figure 2, seuls sont représentées la bague coupante 5 et la bague d'étanchéité 6 dans un premier mode de réalisation conforme à l'invention, sur un tube 1. On constate que la bague d'étanchéité 6 possède une collerette métallique formant son nez 6b en une seule pièce avec la partie arrière 6c de la bague qui comporte le cône 6a, dont la surface extérieure est identique au cône 3a de 24° et qui comporte en partie médiane une gorge circulaire extérieure 14 formant un logement pour un joint plat annulaire 15 en matériau plastique ou en élastomère. La dimension et notamment l'épaisseur de ce joint 15 est telle qu'il fait un peu saillie au-dessus de la surface conique du nez 6b.

Par ailleurs, dans la représentation de la figure 2, la bague d'étanchéité 6 possède une deuxième gorge 16 qui elle est intérieure et qui est située juste à l'extrémité de plus faible diamètre de la surface conique 6a, cette gorge étant également remplie d'un matériau plastique ou élastomérique déformable 17.

Lorsque l'écrou 4 est serré sur l'embout fileté 2a, la partie arrière de l'écrou 4 vient pousser la bague coupante qui vient s'encastrer dans l'évidement conique 6a de la bague d'étanchéité dont le nez vient lui-même s'encastrer dans le cône à 24° du corps 2. Les efforts de serrage sont tels que le nez 6b et l'extension avant 5a des bagues sont rétreints radialement et viennent mordre dans le tube 1. Dans le même temps, le chant avant qui porte l'arête coupante 5b de la bague coupante 5 vient comprimer le joint 17 et renforcer la zone d'étanchéité entre la bague 6 et le tube T. L'étanchéité est par ailleurs assurée entre le joint 15 et le cône à 24°.

La partie métallique du nez 6b constitue un organe de guidage efficace de la bague d'étanchéité dans le cône à 24° tandis que les parties en matière déformable plastiquement ou élastiquement assurent la permanence d'un contact étanche entre la bague 6 et le tube pour le joint 17 et la bague et le corps 2 pour l'anneau 15.

A la figure 3, le mode de réalisation représenté diffère de celui de la figure 2 par le fait que le nez 6b de la bague d'étanchéité 6 possède une pluralité de fentes 18 prenant naissance dans la gorge 14. Le nez est donc divisé en une pluralité de secteurs tronconiques 19 à la base desquels est située la gorge extérieure 14 remplie du joint 15, ces secteurs 19 étant plus courts que le nez 6b de la figure 2 mais prolongés par une bague en matériau déformable 20, en général en une seule pièce avec l'anneau 15 et reliés à ce dernier anneau 15 par des bras intermédiaires 21 qui s'étendent dans les fentes 18 (à la partie basse de la figure 3, la coupe de l'ensemble des bagues 5 et 6 est réalisée dans le plan médian de cette fente 18).

Dans ce mode de réalisation la partie 20 du joint d'étanchéité assure l'essentiel de l'étanchéité de la liaison entre le corps 2 et la tuyauterie 1, la partie 15 formant le moyen de maintien du joint sur le nez de la bague d'étanchéité et à l'avant de celui-ci.

La figure 4 illustre le tube 1 séparé du corps 2 et duquel on a d'une part retiré l'écrou 4 et d'autre part, retiré l'ensemble de joint 15, 21, 20 représenté à la figure 3. On voit que les secteurs 19 ont pénétré dans le tube, de même que l'arête coupante 5a de la bague 5. Pour remettre en service le dispositif il convient donc de réinstaller un nouveau joint d'étanchéité à l'avant de la bague d'étanchéité 6 et pour ce faire on utilise une sorte de mandrin de montage 22 qui vient coiffer l'extrémité du tube 1 pour qu'on puisse glisser un nouveau joint 23 en forme d'anneau cylindrique. Ce joint 23 est situé à l'avant des secteurs 19 comme représenté à là figure 5, ce joint étant ensuite comprimé à l'intérieur du cône à 24° 3a comme illustré à la figure 6.

On indiquera qu'à titre de variante, le mandrin 8 peut être introduit dans l'écrou 4 par la chambre taraudée 4a. Dans ce cas l'épaulement 11 porte sur l'embouchure de cette chambre. Le mandrin 8 a l'extrémité libre de sa partie tubulaire 9 logée dans l'orifice 7. La fonction de bouchon de cette variante n'est pas assurée.

## Revendications

1. Dispositif de liaison étanche de l'extrémité d'une tuyauterie (1) à un corps (2) présentant un embout (2a) fileté extérieurement et un logement (3) intérieur d'accueil de cette extrémité, avec une section d'entrée conique (3a), comprenant :
- un écrou (4) avec une chambre (4a) taraudée pour la réalisation et le démontage de la liaison, coopérant avec l'embout fileté (2a),
- une bague coupante (5) et une bague d'étanchéité (6) montées l'une derrière l'autre dans la chambre (4a) de l'écrou (4) pour être serrées entre ce dernier et le corps (2), la bague d'étanchéité (6) comportant un nez (6b) destiné à pénétrer dans la section conique (3a) du corps (2) et une partie arrière comportant un cône (6a) de sertissage d'un chant coupant (5a) de la bague coupante (5), le nez (6b) susdit étant formé par une collerette métallique en une seule pièce avec la partie arrière (6c), de surface extérieure conique de pente identique à celle de la section conique (3a) du corps, **caractérisé en ce que** la partie arrière de la bague d'étanchéité (6) est pourvue d'une gorge intérieure (16) à l'extrémité du petit diamètre du cône de sertissage (6a) susdit logeant un joint d'étanchéité (17) en matériau déformable.

2. Dispositif selon la revendication 1, **caractérisé en ce que** la collerette susdite comporte des fentes longitudinales (18) de manière à former une pluralité de secteurs (19) indépendants circonférentiellement.

3. Dispositif selon la revendication 2, **caractérisé en ce que** le joint d'étanchéité susdit comporte un anneau arrière (15) engagé dans une gorge circulaire (14) extérieure, un anneau avant (20) situé devant l'extrémité libre des secteurs métalliques (19) et des bras intermédiaires (21) reliant les deux anneaux et logés dans les fentes (18) de la collerette.

4. Dispositif selon l'une quelconque des revendications précédentes, **caractérisé en ce que** la collerette et le ou les joints d'étanchéité sont reliés par correspondance de forme.

5. Dispositif selon l'une quelconque des revendications précédentes, **caractérisé en ce qu'**il comporte un organe de maintien des deux bagues (5 et 6) dans la chambre (4a) de l'écrou (4); constitué par un mandrin (8) divisé par un épaulement (11) en une section (9) logée dans la chambre de l'écrou jusqu'à l'épaulement et sur laquelle au moins la bague d'étanchéité (6) est maintenue par friction et en une section (10) externe à l'écrou servant de support pour un signe d'identification (13) du dispositif.

6. Dispositif selon la revendication 5, **caractérisé en ce que** la section externe (10) est située à l'opposé du nez (6b) de la bague d'étanchéité (6).

## Claims

1. A device for leaktight connection of the end of a pipe (1) to a body (2) presenting an endpiece (2a) with an outside thread and an inner housing (3) with a conical inlet section (3a) for receiving said end, the device comprising:
· a nut (4) with a tapped chamber (4a) for making and breaking the connection, and co-operating with the threaded endpiece (2a); and
· a sharp ring (5) and a sealing ring (6) mounted one behind the other in the chamber (4a) of the nut (4) to be clamped between the nut and the body (2), the sealing ring (6) having a nose (6b) designed to penetrate into the conical section (3a) of the body (2) and a rear portion including a cone (6a) for clamping against a sharp end edge face (5a) of the sharp ring (5), the above-mentioned nose (6b) being formed by a metal collar integral with the rear portion (6c) and having a conical outer surface with a slope identical to the slope of the conical section (3a) of the body, the device being **characterized in that** the rear portion of the sealing ring (6) is provided with an inner groove (16) at the end of the small diameter of the above-mentioned clamping cone (6a) housing a sealing gasket (17) of deformable material.

2. A device according to claim 1, **characterized in that** the above-mentioned collar includes longitudinal slots (18) so as to form a plurality of circumferentially-independent sectors (19).

3. A device according to claim 2, **characterized in that** the above-mentioned sealing gasket comprises a rear ring (15) engaged in an outer circular groove (14), a front ring (20) situated in front of the free end of the metal sectors (19) and intermediate arms (21) interconnecting the rear and front rings and housed in the slots (18) of the collar.

4. A device according to any preceding claim, **characterized in that** the collar and the or each sealing gasket are connected together by matching shapes.

5. A device according to any preceding claim, **characterized in that** it includes a member for holding the sharp ring and the sealing ring (5 and 6) in the chamber (4a) of the nut (4), said means being constituted by a mandrel (8) subdivided by a shoulder (11) into a section (9) housed in the chamber of the nut up to the shoulder, and on which at least the sealing ring (6) is held by friction, and a section (10) outside the nut serving as a support for a sign (13) identifying the device.

6. A device according to claim 5, **characterized in that** the outer section (10) is situated opposite from the nose (6b) of the sealing ring (6).

## Patentansprüche

1. Vorrichtung für eine dichte Verbindung des Endes einer Rohrleitung (1) mit einem Körper (2), der einen Ansatz (2a) mit einem Außengewinde, und eine Innenaussparung (3) zur Aufnahme des Endes mit einem konischen Eingangsabschnitt (3a) hat, umfassend:
- eine Mutter (4) mit einer Kammer (4a), die ein Innengewinde zum Herstellen und zum Lösen der Verbindung hat, das mit dem Gewindeansatz (2a) zusammenwirkt,
- einen Schneidering (5) und einen Dichtungsring (6), die hintereinander in der Kammer (4a) der Mutter (4) angeordnet sind, um zwischen dieser und dem Körper (2) eingespannt zu werden, wobei der Dichtungsring (6) eine Nase (6b) hat, die dazu vorgesehen ist, in den konischen Abschnitt (3a) des Körpers (2) einzudringen, und einen hinteren Abschnitt mit einem Konus (6a) zum Eindrücken einer Schneidekante (5a) des Schneiderings (5), wobei die Nase (6b) von einem mit dem hinteren Abschnitt (6c) einstückig ausgebildeten metallischen Kragen gebildet ist, und wobei ihre konische abgeschrägte Außenfläche eine identische Neigung wie der konische Abschnitt (3a) des Körpers hat, **dadurch gekennzeichnet, daß** der hintere Abschnitt des Dichtungsrings (6) am Ende des kleinen Durchmessers des Spannkonus (6a) eine ein Dichtungselement (17) aus verformbarem Material aufnehmende Innennut (16) hat.

2. Vorrichtung nach Anspruch 1, **dadurch gekennzeichnet, daß** der Kragen derart in Längsrichtung geschlitzt ist, daß er in Umfangsrichtung mehrere unabhängige Abschnitte (19) bildet.

3. Vorrichtung nach Anspruch 2, **dadurch gekennzeichnet, daß** das Dichtungselement einen hinteren Ring (15), der in eine kreisförmigen Außennut (14) eingreift, einen vorderen Ring (20), der vor dem freien Ende der metallischen Abschnitte (19) angeordnet ist, und Zwischenarme (21) umfaßt, welche die beiden Ringe miteinander verbinden und in den Schlitzen (18) des Kragens angeordnet sind.

4. Vorrichtung nach einem der vorhergehenden Ansprüche, **dadurch gekennzeichnet, daß** der Kragen und das oder die Dichtungselement(e) durch Formschlüssigkeit miteinander verbunden sind.

5. Vorrichtung nach einem der vorhergehenden Ansprüche, **dadurch gekennzeichnet, daß** sie ein Mittel zum Halten der beiden Ringe (5 und 6) in der Kammer (4a) der Mutter (4) umfaßt, das von einem Dorn (8) gebildet ist, der von einer Schulter (11) unterteilt wird in einen Bereich (9) in der Kammer der Mutter bis zur Schulter, an dem zumindest der Dichtungsring (6) reibschlüssig gehalten ist, und einen Bereich (10) außerhalb der Mutter, der dazu dient, ein Zeichen (13) zur Identifizierung der Vorrichtung zu tragen.

6. Vorrichtung nach Anspruch 5, **dadurch gekennzeichnet, daß** der äußere Bereich von der Nase (6b) des Dichtungsrings (6) weg weisend angeordnet ist.
